# EUROPEAN PATENT APPLICATION

(11) **EP 2 960 843 A1**
(43) Date of publication of application: **30.12.2015**
(21) Application number: 15173074.4
(22) Date of filing: 22.06.2015
(51) Int. Cl.: G06Q 10/10, H04L 29/12

(54) **AN APPARATUS, SYSTEM AND METHOD OF AGGREGATING MULTIPLE ADDRESS BOOK SOURCES**

(30) Priority: 23.06.2014 US 201462015992 P; 18.06.2015 US 201514743759
(71) Applicant: Synchronoss Technologies, Inc., Bridgewater, NJ 08807 (US)
(72) Inventor: Ranganath, Panduranga, Union City, CA 94587 (US); Khandawale, Rajesh, Sunnyvale, CA 94089 (US); Vishnubhatt, Padmakar, Los Altos, CA 94024 (US); Pavuluri, Shashi, San Jose, CA 95135 (US)
(74) Representative: Goddar, Heinz J.

(57) **Abstract**

Embodiments of the present invention are directed to an apparatus, system and method of aggregating address book sources. Contact entries from these sources are retrieved by a server. There can be multiple contact entries for the same contact. Without modifying the original contact entries, the server links together similar contact entries such that these similar contact entries are virtually aggregated but not physically merged. An aggregated address book at the server includes a distinct contact entry for each contact and can be viewed from one or more end-user devices either in a browser or in a client application. One or more address book sources are automatically updated based on changes made to the aggregated address book at the server from an end-user device. The aggregated address book is also automatically updated based on changes made at one or more of the address book sources.

## Description

### Related Applications

This application claims benefit of priority under 35 U.S.C. section 119(e) of the copending United States Provisional Patent Application Serial No. 62/015,992, filed June 23, 2014, entitled "Method or Procedure to Aggregate Multiple Address Book Sources in the Mobile and Internet Environments," which is hereby incorporated by reference in its entirety.

### Field of Invention

The present invention relates to address books. More particularly, the present invention relates to an apparatus, system and method of aggregating multiple address book sources.

### Background of the Invention

Users use multiple ISPs (Internet service providers) to store their address book information. The user experience for the users vary based on the type of end-user devices the users are using, the operating systems of the end-user devices, and whether the users are using a web browser to view their address book information. Each ISP typically will only display an address book that is managed by it. However, a user may want to see an aggregated address book that works across the multiple ISPs as well as address books on the end-user devices and on the web. Prior art solutions use a deduplication process that physically merges similar contact entries. Although an aggregated address book is provided, the deduplication process results in modification of original contact entries such that these original contact entries are no longer available to the user. Furthermore, the user could also be using multiple end-user devices, which further complicates the problem for the user since the prior art aggregated address book is typically stored on one of the multiple end-user devices after the deduplication process.

### Brief Summary of the Invention

Embodiments of the present invention are directed to an apparatus, system and method of aggregating address book sources. Contact entries from these sources are retrieved by a server. There can be multiple contact entries for the same contact. Without modifying the original contact entries, the server links together similar contact entries such that these similar contact entries are virtually aggregated but not physically merged. An aggregated address book at the server includes a distinct contact entry for each contact and can be viewed from one or more end-user devices either in a browser or in a client application. One or more address book sources are automatically updated based on changes made to the aggregated address book at the server from an end-user device. The aggregated address book is also automatically updated based on changes made at one or more of the address book sources.

In one aspect, a computing device is provided. The computing device includes contact entries that are received from a plurality of sources, wherein the contact entries includes a first contact entry and a second contact entry for a contact, an accumulation engine that identifies the first contact entry and the second contact entry as being associated with the same contact and that generates a combined contact entry for the contact based on the identification, and an aggregated address book that includes the combined contact entry for the contact, wherein the combined contact entry includes all data from across the first contact entry and the second contact entry.

In some embodiments, the combined contact entry is separate and distinct from the first contact entry and the second contact entry.

In some embodiments, the aggregated address book includes a distinct contact entry for each other contact.

In some embodiments, the combined contact entry also include source information for each of the data.

In some embodiments, the computing device also includes an interface module that includes at least one user interface (UI) that is accessible by a user to provide an identification of each of the sources that requires login information and to provide access data for the each of the sources that requires login information such that the computing device is able to access content from the each of the sources that requires login information.

In some embodiments, the combined contact entry of the aggregated address book is modifiable by the user.

In some embodiments, the computing device also includes an export module configured to export the aggregated address book to any one of the sources.

In some embodiments, the sources includes a local address book on an end-user device used by the user. Alternatively or in addition to, the sources includes a remote address book provided by a web-based email service.

In some embodiments, the first contact entry and the second contact entry are from the same source. Alternatively or in addition to, the first contact entry and the second contact entry are from different sources.

In another aspect, a system is provided. The system includes a server and an end-user device. The server is configured to receive contact entries from a plurality of sources via a network, identify from the contact entries a portion of the contact entries that is associated with the same contact to generate a combined contact entry for that contact, wherein the combined contact entry includes all data from across the portion of the contact entries, wherein the combined contact entry is a separate and distinct entry from the contact entries, and generate an aggregated address book that includes the combined contact entry for that contact and a distinct contact entry for each other contact. The end-user device is in communication with the server to access the aggregated address book.

In some embodiments, the aggregated address book is automatically updated based on changes at the sources.

In some embodiments, the aggregated address book is modifiable by a user from the end-user device. In some embodiments, a source corresponding to the user modification is automatically updated.

In some embodiments, the end-user device includes a local address book that is configured to import the aggregated address book such that contents of the local address book is replaced by contents of the aggregated address book.

In some embodiments, the aggregated address book is viewable in a web browser on the first end-user device. Alternatively or in addition to, the aggregated address book is viewable in a client program on the end-user device.

In yet another aspect, a method includes a server receiving contact entries from a plurality of sources via a network, the server identifying from the contact entries a portion of the contact entries that is associated with the same contact, the server generating a combined contact entry for that contact, comprising the server obtaining all data from across the portion of the contact entries, wherein the combined contact entry is a separate and distinct entry from the contact entries, the server generating an aggregated address book that includes the combined contact entry for that contact and a distinct contact entry for each other contact, and an end-user device communicating with the server to access the aggregated address book.

In some embodiments, the method also includes the server receiving from a user an identification of at least one of the sources and access data that allows the server to access content from the at least one of the sources.

In some embodiments, the method also includes the end-user device downloading a client program to view the aggregated address book.

### Brief Description of the Drawings

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
FIG. 1 illustrates an exemplary system according to some embodiments.
FIG. 2 illustrates a block diagram of an exemplary computing device according to some embodiments.
FIG. 3 illustrates an exemplary method of aggregating multiple address books at a server according to some embodiments.

### Detailed Description of the Invention

In the following description, numerous details are set forth for purposes of explanation. However, one of ordinary skill in the art will realize that the invention can be practiced without the use of these specific details. Thus, the present invention is not intended to be limited to the embodiments shown but is to be accorded the widest scope consistent with the principles and features described herein.

Embodiments of the present invention are directed to an apparatus, system and method of aggregating address book sources. Contact entries from these sources are retrieved by a server. There can be multiple contact entries for the same contact Without modifying the original contact entries, the server links together similar contact entries such that these similar contact entries are virtually aggregated but not physically merged. An aggregated address book at the server includes a distinct contact entry for each contact and can be viewed from one or more end-user devices either in a browser or in a client application. One or more address book sources are automatically updated based on changes made to the aggregated address book at the server from an end-user device. The aggregated address book is also automatically updated based on changes made at one or more of the address book sources.

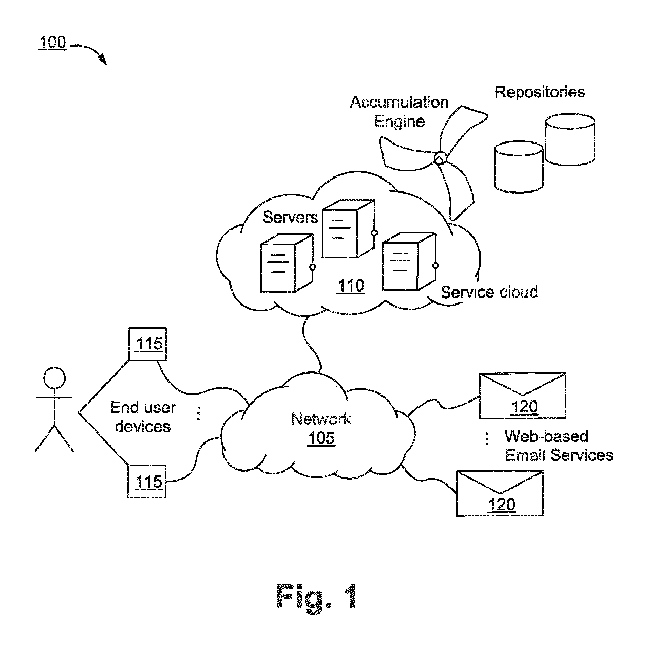

FIG. 1 illustrates an exemplary system 100 according to some embodiments. The system 100 typically includes a network 105, such as the Internet, and a service cloud 110 that is communicatively coupled with one or more end-user devices 115 via the network 105. A server(s) in the cloud 110 provides a service to its subscribers. Assume for purposes of discussion herein that all of the end-user devices 115 belong to a single subscriber of the service. The service includes a backup feature that is configured to back up data, such as photos, address books, videos, etc., from all of the subscriber's end-user device(s) 115 such that backed up data can be transferred from one end-user device to another end-user device. The service also includes a recommendation feature configured to provide an aggregated address book of all of the subscriber's contacts across all address book sources, each including an address book. In some embodiments, an address book can be a native address book on an end-user device 115 or can be one that is provided with an email application. An email application can be a local application that is installed on an end-user device 115, such as MICROSOFT OUTLOOK email application, or can be a remote application that is provided by a web-based email service 120, such as YAHOO! MAIL email service. Contact entries from local address books (e..g, native address books, local email applications) can be received by the server from any of the one or more end-user devices 115 during a routine backup(s). Contact entries from remote address books (e.g., web-based email applications) that are identified by the subscriber are received by the server upon having access to these remote address books. It is possible that the subscriber has multiple contact entries for the same contact in one address book source or in different address book sources. For example, the subscriber can have a first contact entry for John Smith that includes a cell number and a home address, and a second contact entry for John Smith that includes an email address and a home address. The source of the first contact entry is the native address book on a mobile device, and the source of the first contact entry is the remote address book provided by YAHOO! MAIL email service. The server receives both of these contact entries for John Smith.

The recommendation feature of the server includes an accumulation engine. The recommendation feature presents potential contact candidates for actual aggregation that results in a single contact entry or virtual aggregation that links contacts coming from a plurality of address book sources. In some embodiments, the accumulation engine identifies which of those contact entries received by the server are associated with the same contact (e.g., John Smith) based on one or more criterion (e.g., common/shared data, such as the home address, between two or more contact entries) and generates a combined contact entry for that contact such that the aggregated address book includes only a distinct contact entry for each of the subscriber's contacts. The combined contact entry typically includes all data (e.g., the name of the contact, the cell number, the home address, the email address) from across all similar contact entries (e.g., the first and second contacts for John Smith). The data of the combined contact entry typically includes at least one datum that is common to the similar contact entries. In this example, the at least one datum that is common to the first and second contact entries is John Smith's home address.

In some embodiments, the backed up data from the end-user devices 115 and the aggregated address book generated by the server are stored in one or more repositories. The one or more repositories can be located in the cloud 110, as illustrated in FIG. 1, although the repositories can be located elsewhere in the system 100.

In some embodiments, the subscriber has an account in the cloud 110. The account allows the subscriber to set preferences, such as frequency of backups, notifications and information sharing settings, and to provide access data that allows the server to access or retrieve content from the address book sources. For example, access data can include login information (e.g., a username and a password) for each web-based email application that the subscriber would like contact entries to be retrieved from. The aggregated address book generated and maintained by the server is associated with the account. As such, the subscriber is able to access the account to view the aggregated address book via a web page or a client program installed on an end-user device 115. The subscriber is therefore able to view the aggregated address book from any one of the end-user devices 115. In addition, the subscriber is not only able to view the aggregated address book but is also able to download, or otherwise save, the aggregated address book in a format specified by the subscriber and to import, either entirely or partially, the aggregated address book to any one of the address book sources. To import a partial portion of the aggregated address book, the subscriber selects some but not all of the contact entries of the aggregated address book to export from the server.

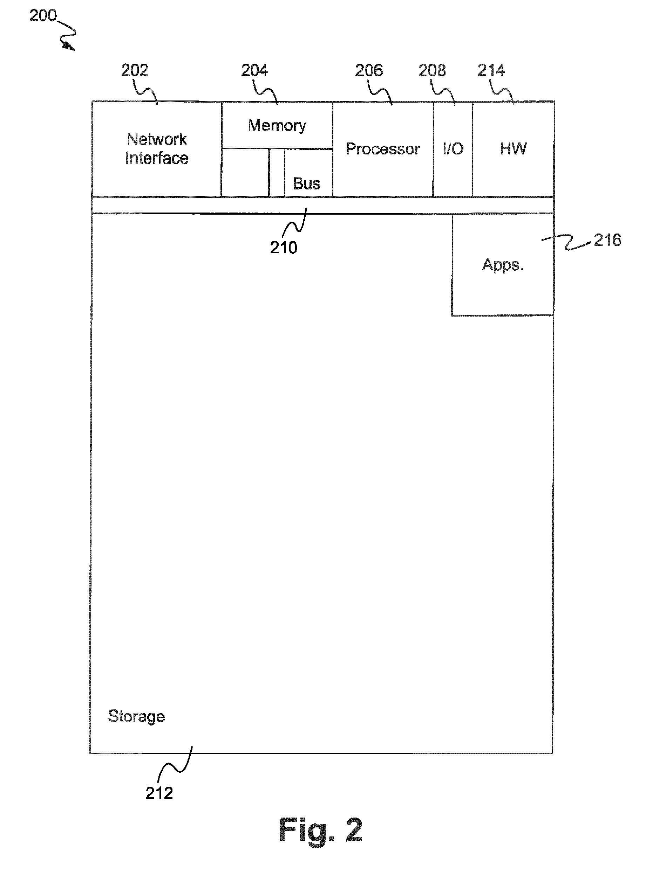

FIG. 2 illustrates a block diagram of an exemplary computing device 200 according to some embodiments. The computing device 200 is able to be used to acquire, cache, store, compute, search, transfer, communicate and/or display information. The server(s) in the cloud 110 and/or the end-user devices 115 of the FIG. 1 can be similarly configured as the computing device 200.

In general, a hardware structure suitable for implementing the computing device 200 includes a network interface 202, a memory 204, processor(s) 206, I/O device(s) 208, a bus 210 and a storage device 212. The choice of processor 206 is not critical as long as a suitable processor with sufficient speed is chosen. In some embodiments, the computing device 200 includes a plurality of processors 206. The memory 204 is able to be any conventional computer memory known in the art. The storage device 212 is able to include a hard drive, CDROM, CDRW, DVD, DVDRW, flash memory card, RAM, ROM, EPROM, EEPROM or any other storage device. The computing device 200 is able to include one or more network interfaces 202. An example of a network interface includes a network card connected to an Ethernet or other type of LAN. The I/O device(s) 208 are able to include one or more of the following: keyboard, mouse, monitor, display, printer, modem, touchscreen, button interface and other devices. Application(s) 214, such as the client program or one or more server side applications implementing the service discussed above, are likely to be stored in the storage device 212 and memory 204 and are processed by the processor 206. More or less components or modules shown in FIG. 2 are able to be included in the computing device 200. For example, the computing device 200 can include an accumulation engine and an export module. As discussed elsewhere, the accumulation engine is configured to identify, based on one or more criterion, contact entries that are associated with the same contact and to generate a combined contact entry for that contact based on the identification. As also discussed elsewhere, the export module is configured to export, either entirely or partially, the aggregated address book to any one of the address book sources.

The computing device 200 can be a server or an end-user device. Exemplary end-user devices include, but are not limited to, a tablet, a mobile phone, a smart phone, a smart watch, a desktop computer, a laptop computer, a netbook, or any suitable computing device such as special purpose devices, including set top boxes and automobile consoles.

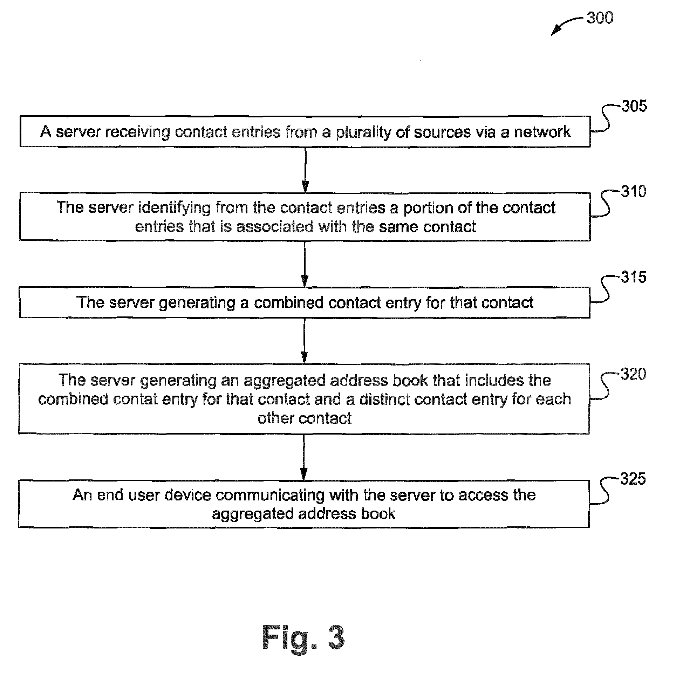

FIG. 3 illustrates an exemplary method 300 of aggregating multiple address books at a server according to some embodiments. Assume the server, such as the server of FIG. 1, includes an interface module that includes at least one user interface (UI) that is accessible by a subscriber to access an aggregated address book that is generated and maintained by the server. In some embodiments, the UI also allows the subscriber, prior to the method 300, to provide an identification of one or more the address book sources that require login information and to provide access data (e.g., login information such as username and password) that allows the server to access content from those address book sources, with or without further input from the subscriber. In some embodiments, all of the subscriber's address book sources cover all connected devices, which include email services provided by ISPs and email applications on end-user devices used by the subscriber (e.g., connected car with address book, smart watch).

At a step 305, the server receives contact entries from the address book sources via a network such as the Internet. In some embodiments, the server uses the access data provided by the subscriber to gain access to the contact entries from those address book sources that require login information, such as from web-based email services. Alternatively or in addition to, the server receives the contact entries directly from the subscriber's end-user devices during routine backup sessions.

At a step 310, the server identifies from the contact entries a portion of the contact entries that is associated with the same contact. In some embodiments, the accumulation engine of the server uses one or more criterion to identify the portion of the contact entries as being associated with the same contact. For example, the one or more criterion can include common data, such as a home number, an email address, and/or geolocation information. In some embodiments, the accumulation engine is able to identify that three or more contact entries (e.g., CE #1, CE #2 and CE #3) are for the same contact when (1) the CE #1 and the CE #2 share a first datum that CE #3 does not have, and (2) the CE #2 and the CE #3 share a second datum that the CE #1 does not have.

At a step 315, the server generates, based on the identification at the step 310, a combined contact entry for that contact. The accumulation engine of the server obtains all data from across the portion of the contact entries to be included in the combined contact entry. The first contact entry and the second contact entry can be from the same address book source or different address book sources. The combined contact entry is a separate and distinct entry from the first and the second contact entries. Typically, the first and the second contact entries are not modified when the combined contact entry is generated by the server. Continuing with the above example, two contact entries exist for John Smith. The combined contact entry includes his cell number, his email address and his home address. The server generates a combined contact entry for John Smith. The combined contact entry for John Smith is a separate and distinct entry from the original two contact entries for John Smith. In some embodiments, the combined contact entry also includes source information for each of the data in the combined contact entry.

At a step 320, the server generates an aggregated address book that includes the combined contact entry for the contact (e.g., John Smith) and a distinct contact entry for each other contact.

At a step 325, an end-user device communicates with the server to access the aggregated address book. The aggregated address book can be viewed in a web browser of the end-user device or in a client program on the end-user device. In some embodiments, the subscriber is able to download the aggregated address book from the server in a format specified by the subscriber. In some embodiments, the subscriber is also able to import, either entirely or partially, the aggregated address book from the server to one or more address book sources such that the address books at those sources are replaced, either entirely or partially, by the aggregated address book.

In some embodiments, the server automatically updates the aggregated address book based on changes at the address book sources. The updates occur instantaneously after the changes at the address book sources occur, periodically or on demand.

In some embodiments, the subscriber is able to modify the aggregated address book, such as the combined contact entry for the contact, at the server from the end-user device. After the aggregated address book is modified, an address book source corresponding to the user modification is automatically updated either instantaneously, periodically or on demand. Continuing with the example above, the source of the first contact entry for John Smith is the native address book on the end-user device, and the source of the second contact entry for John Smith is the remote address book provided by YAHOO! MAIL. When the subscriber edits the combined contact entry for John Smith with an updated cell number, John Smith's contact entry in the native address book is automatically updated with the new cell number. For another example, if the subscriber modifies the combined contact entry for John Smith with an updated home address, the native address book and the remote address book provided by YAHOO! MAIL are both automatically updated since the first and the second contact entries include his home address.

As demonstrated herein, in contrast to prior art solutions, the present solution automatically links similar contact entries so that the contact entries are virtually aggregated but are not physically merged. As such, original contact entries are still available to a subscriber after an aggregation of multiple address book sources. The aggregated address book can be viewed on each of the subscriber's end-user devices such that the subscriber using a first end-user device to call a contact does not need to use a second end-user device to access the contact's home number. The aggregated address book can be viewed and managed on the first end-user device via a web browser or a client program, both of which are able to access the subscriber's account. The aggregated address book is kept up-to-date based on changes happening at the address book sources. The aggregated address book can be saved in a format specified by the subscriber to a memory location (e.g., SD card, phone memory) and can be exported, either partially or in its entirety, to one or more of the address book sources.

In some embodiments, the smart recommendation feature allows a subscriber to select either actual aggregation of contacts, resulting into a single contact entry, or virtual aggregation of contacts, using links between contact entries for a merged view without modification of original contact entries. The service remembers (stores) the subscriber's preferences even through end-user device changes. In addition, the service remembers (stores) the subscriber's preferences and/or contact candidates in conjunction with information on server side besides keeping these details with contacts on both client and server.

One of ordinary skill in the art will realize other uses and advantages also exist. While the invention has been described with reference to numerous specific details, one of ordinary skill in the art will recognize that the invention can be embodied in other specific forms without departing from the spirit of the invention. Thus, one of ordinary skill in the art will understand that the invention is not to be limited by the foregoing illustrative details, but rather is to be defined by the appended claims.

## Claims

1. A computing device comprising:
contact entries that are received from a plurality of sources, wherein the contact entries includes a first contact entry and a second contact entry for a contact;
an accumulation engine that identifies the first contact entry and the second contact entry as being associated with the same contact and that generates a combined contact entry for the contact based on the identification; and
an aggregated address book that includes the combined contact entry for the contact,
wherein the combined contact entry includes all data from across the first contact entry and the second contact entry.

2. The computing device of Claim 1, wherein the combined contact entry is separate and distinct from the first contact entry and the second contact entry, and wherein the combined contact entry also include source information for each of the data.

3. The computing device of Claim 2, wherein the aggregated address book includes a distinct contact entry for each other contact.

4. The computing device of Claim 3, further comprising an interface module that includes at least one user interface (UI) that is accessible by a user to provide an identification of each of the sources that requires login information and to provide access data for the each of the sources that requires login information such that the computing device is able to access content from the each of the sources that requires login information.

5. The computing device of Claim 4, wherein the combined contact entry of the aggregated address book is modifiable by the user.

6. The computing device of Claim 5, further comprising an export module configured to export the aggregated address book to any one of the sources, wherein the sources includes at least one of a local address book on an end-user device used by the user and a remote address book provided by a web-based email service.

7. The computing device of Claim 6, wherein the first contact entry and the second contact entry are from the same source.

8. The computing device of Claim 6, wherein the first contact entry and the second contact entry are from different sources.

9. A system comprising:
a server configured to:
receive contact entries from a plurality of sources via a network;
identify from the contact entries a portion of the contact entries that is associated with the same contact to generate a combined contact entry for that contact, wherein the combined contact entry includes all data from across the portion of the contact entries, wherein the combined contact entry is a separate and distinct entry from the contact entries; and
generate an aggregated address book that includes the combined contact entry for that contact and a distinct contact entry for each other contact; and
an end-user device in communication with the server to access the aggregated address book.

10. The system of Claim 9, wherein the aggregated address book is automatically updated based on changes at the sources, and wherein the aggregated address book is modifiable by a user from the end-user device.

11. The system of Claim 10, wherein a source corresponding to the user modification is automatically updated.

12. The system of Claim 11, wherein the end-user device includes a local address book that is configured to import the aggregated address book such that contents of the local address book is replaced by contents of the aggregated address book.

13. The system of Claim 12, wherein the aggregated address book is viewable in at least one of a web browser on the first end-user device and a client program on the end-user device.

14. A method comprising:
a server receiving contact entries from a plurality of sources via a network;
the server identifying from the contact entries a portion of the contact entries that is associated with the same contact;
the server generating a combined contact entry for that contact, comprising the server obtaining all data from across the portion of the contact entries, wherein the combined contact entry is a separate and distinct entry from the contact entries;
the server generating an aggregated address book that includes the combined contact entry for that contact and a distinct contact entry for each other contact; and
an end-user device communicating with the server to access the aggregated address book.

15. The method of Claim 14, further comprising:
the server receiving from a user an identification of at least one of the sources and access data that allows the server to access content from the at least one of the sources; and
the end-user device downloading a client program to view the aggregated address book.
